(19) Europäisches Patentamt

European Patent Office

Office européen des brevets

(11) **EP 2 838 084 A1**

(12) **EUROPEAN PATENT APPLICATION**

(43) Date of publication:
**18.02.2015 Bulletin 2015/08**

(51) Int Cl.:
**G10K 15/00** *(2006.01)*     **G06F 17/50** *(2006.01)*
**G01H 7/00** *(2006.01)*

(21) Application number: **13306149.9**

(22) Date of filing: **13.08.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Thomson Licensing**
**92130 Issy-les-Moulineaux (FR)**

(72) Inventor: **Spille, Jens**
**30966 Hemmingen (DE)**

(74) Representative: **Hartnack, Wolfgang**
**Deutsche Thomson OHG**
**European Patent Operations**
**Karl-Wiechert-Allee 74**
**30625 Hannover (DE)**

(54) **Method and Apparatus for determining acoustic wave propagation within a modelled 3D room**

(57)     For estimating the acoustical behaviour of multi-loudspeaker sound reproduction systems, acoustic wave propagations can be simulated using the Finite Difference Time Domain (FDTD). In particular the influence of the room dimension, the sound source, its injection method, and the boundary method on the accuracy is analysed. However, a 2D simulation produces inaccurate results while a full 3D simulation costs more calculation cycles. To overcome such problems, a 3D simulation is used wherein perfect-match upper and lower boundary layers are added to an initial 2D model and the third dimension of the room is only one mesh layer thick.

Fig. 10

## Description

Technical field

The invention relates to a method and to an apparatus for determining acoustic wave propagation within a modelled 3D room using Finite Difference Time Domain processing.

Background

An accurate calculation of acoustic wave propagation is necessary for a reliable analysis of sound reproduction systems. For estimating the acoustical behaviour of multi-loudspeaker sound reproduction systems, acoustic wave propagations can be simulated using the Finite Difference Time Domain (FDTD) processing, see http://en.wikipedia.org/wiki/ Finite-difference time-domain method . In particular the influence of the room dimension, the sound source, its injection method, and the boundary method on the accuracy is to be analysed. Experiments have shown that a 2D simulation produces inaccurate results while a full 3D simulation produces good results but requires more calculation cycles.

Summary of invention

A problem to be solved by the invention is to provide a high-accuracy simulation of acoustic wave propagations with a reduced number of calculation cycles. This problem is solved by the method disclosed in claim 1. An apparatus that utilises this method is disclosed in claim 2.

According to the invention, for getting an accurate room impulse response (RIR) for a modelled space, an entire 3D room is simulated using a 3D model wherein the room is enveloped with Perfect Matched Layer boundaries and the 3rd dimension has a thickness of only one mesh layer.

Advantageously, the inventive processing achieves sufficiently accurate 3D results for Acoustic Wave Propagation with a significant reduction of the number of calculation cycles.

In principle, the inventive method is suited for determining acoustic wave propagation within a modelled 3D room using Finite Difference Time Domain processing for getting a room impulse response at an observation point within a rectangular grid array arranged within said modelled 3D room, wherein said grid array represents discrete sound pressure points, said method including the steps:

- adding (102, 103) to a flat initial 2D model of said 3D room perfect-match upper and lower boundary layers, whereby a third dimension of said initial 2D model is only one mesh layer thick, so as to establish a pseudo-3D model of said room;
- carrying out (104) for said pseudo-3D model of said room a 3D Finite Difference Time Domain processing for all incremental time steps, whereby a sound source is injected into at least one of said discrete sound pressure points;
- reducing (105) said pseudo-3D model of said room to a 2D model so as to get the determined acoustic wave propagation.

In principle the inventive apparatus is suited for determining acoustic wave propagation within a modelled 3D room using Finite Difference Time Domain processing for getting a room impulse response at an observation point within a rectangular grid array arranged within said modelled 3D room, wherein said grid array represents discrete sound pressure points, said apparatus including:

- means (102, 103) being adapted for adding to a flat initial 2D model of said 3D room perfect-match upper and lower boundary layers, whereby a third dimension of said initial 2D model is only one mesh layer thick, so as to establish a pseudo-3D model of said room;
- means (104) being adapted for carrying out for said pseudo-3D model of said room a 3D Finite Difference Time Domain processing for all time incremental time steps, whereby a sound source is injected into at least one of said discrete sound pressure points;
- means (105) being adapted for reducing said pseudo-3D model of said room to a 2D model so as to get the determined acoustic wave propagation.

Advantageous additional embodiments of the invention are disclosed in the respective dependent claims.

Brief description of drawings

Exemplary embodiments of the invention are described with reference to the accompanying drawings, which show in:

Fig. 1    Rectangular mesh and triangular mesh;
Fig. 2    2D grid array;
Fig. 3    Gaussian, Kaiser Bessel and Ricker Wavelet sound source spectra;
Fig. 4    Hard and soft injection processing;
Fig. 5    Pressure values along a straight line;
Fig. 6    PML boundaries;
Fig. 7    Wave propagation simulation;
Fig. 8    Output of a simulation run;
Fig. 9    Influence of model parameters on the calculation accuracy of an acoustic wave propagation;
Fig. 10    Block diagram of the inventive processing.

Description of embodiments

The accurate calculation of acoustic wave propagation is important for reliable analysis of sound reproduction systems. In order to reduce the computational effort only a slice of a room could be calculated, first using a 2D-FDTD processing instead of a 3D processing. However, the result will be insufficient because two-dimensional point sources are line sources in three dimensions. Therefore it appears necessary to apply 3D-FDTD to obtain accurate results.
According to the invention, for reducing the required computational power, a 3D room is constructed which has a thickness of one mesh layer only, and which has strongly absorbing (i.e. anechoic) upper and lower boundaries. The reflection can be reduced by up to 70dB, which represents a nearly reflection-free room and which is enough for achieving sufficiently accurate results.
Finite Difference Time Domain (FDTD) processing is used for simulating the wave propagation. In frequency domain, sine waves are used as sound sources and are observed at the stabilised output. In time domain, impulses are used as sound sources and are observed at the transient part of the output. Using a Fast Fourier Transform (FFT), also a frequency domain output is formed from that time domain output. The time domain output can be used in a convolution operation with an arbitrary audio input to be able to listen to that audio signal as it would sound in the simulated environment. Such simulation can be performed using Python software with the scientific tools NumPy, SciPy, and Mathplotlib.
The invention extends known FDTD processing for acoustic wave propagations as described e.g. in I. Drumm, "Finite Difference Time Domain Tutorial", EPSRC Summer School 2007, 2007, pages 1-9, www.acoustics.salford.ac.uk/res/drumm/ FDTD-FE/Implementing%20FDTD%20Tutorial.doc, and in J.B. Schneider, "Understanding the Finite-Difference Time-Domain Method", pages 321-327, May 25, 2013, Washington State University, US, www.eecs.wsu.edu/~schneidj/ufdtd/ufdtd.pdf.

*A. FDTD processing*

*A.1 FDTD equation*

The Finite difference time domain FDTD processing was originally developed for solving Maxwell equations. FDTD is based on a finite-difference approximation of both space and time derivatives in the wave equation. The acoustic sound pressure p and two (for 2D) or three (for 3D) components of particle velocity $U_x, U_y, (U_z)$ are chosen as quantities, cf. J. Escolano, B. Pueo, S. Bleda, J.J. López, "Wave Field Synthesis 3D Simulator Based on Finite-Difference Time-Domain Method", AES Convention 116, May 2004, Berlin, Paper 6056, and the above mentioned I. Drumm article.
The first and second acoustic equations are given by the Euler equation (1) and the continuity equation (2):

$$\rho_0 \frac{\partial \vec{U}_a}{\partial t} = -\nabla p \qquad\qquad (1)$$

$$\frac{\partial p}{\partial t} = -\rho_0 c^2 \nabla \cdot \vec{U}_a \qquad\qquad (2)$$

with

$$\nabla p = \left( \frac{\partial p}{\partial x}, \frac{\partial p}{\partial y} \right) \qquad (3)$$

$$\nabla \cdot \vec{U}_a = \frac{\partial \vec{U}_a}{\partial x} + \frac{\partial \vec{U}_a}{\partial y} \qquad (4)$$

where $p$ is the sound pressure and $\vec{U}_a$ is the vectorial gas particle velocity in the air.

*A.2 Mesh topologies*

In the discrete world the sound pressure and the gas particle velocity are not considered for every point in space, but only for some selected points. The selection of discrete points has an influence on the accuracy of the calculated wave propagation.

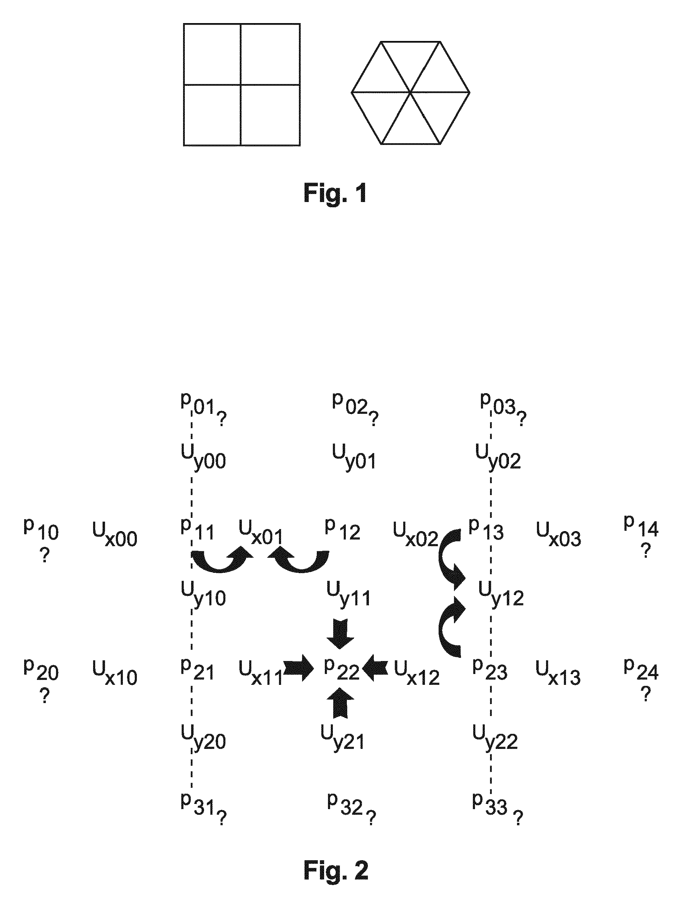

In a 2D processing typically a rectangular or a triangular mesh as depicted in Fig. 1 is used. The line crossing points in Fig. 1 are indicating the discrete sound pressure samples $p_i$, also called 'scattering junctions', and the connection lines are indicating the particle velocity samples, also called 'digital waveguides' $v_i$. Scattering junctions are functionally identical to the 'adaptors' described in the wave digital filtering context, cf. St. Bilbao, "DIGITAL WAVEGUIDE NETWORKS FOR INHOMOGENEOUS MEDIA", Proceedings of the COST G-6 Conference on Digital Audio Effects (DAFX-00), Verona, IT, 7-9 December 2000.

The rectangular mesh tends to produce more square-like formed wave fronts, due to a small speed dispersion in a diagonal direction, whereas the dispersion factor of the triangle mesh or grid is nearly independent of the propagation direction, cf. L. Savioja, "Modeling Technics for Virtual Acoustics", Dissertation at Helsinki University of Technology, Espoo, FI, 3 December 1999, and D.T. Murphy, D.M. Howard, "2-D digital waveguide mesh topologies in room acoustics modelling", Proceedings of the COST G-6 Conference on Digital Audio Effects (DAFX-00), Verona, IT, 7-9 December 2000.

In the experiments of the inventor the simpler rectangular mesh was used.

*A.3 FDTD discretised equations*

As follows from the above, acoustic phenomena should be studied using 3D equations. To reduce complexity, first 2D expressions were developed, and the solution for the 3D case can be derived from the 2D equations. With the 2D discrete notation

$$p(x,y,t) = p(i\Delta x, j\Delta y, n\Delta t) = p^{i,j,n} \quad \text{and} \quad U_a = U, \qquad (5)$$

the wave equations can be written as

$$U_x^{i-\frac{1}{2},j,n+\frac{1}{2}} = U_x^{i-\frac{1}{2},j,n-\frac{1}{2}} - \frac{\Delta t}{\Delta x} \frac{1}{\rho_0} (p^{i,j,n} - p^{i-1,j,n}) \qquad (6)$$

$$U_y^{i,j-\frac{1}{2},n+\frac{1}{2}} = U_y^{i,j-\frac{1}{2},n-\frac{1}{2}} - \frac{\Delta t}{\Delta y} \frac{1}{\rho_0} (p^{i,j,n} - p^{i,j-1,n}) \qquad (7)$$

and

$$p^{i,j,n+1} = p^{i,j,n} - \frac{\rho_0 c^2 \Delta t}{\Delta x} (U_x^{i+\frac{1}{2},j,n+\frac{1}{2}} - U_x^{i-\frac{1}{2},j,n+\frac{1}{2}})$$ (8)

$$- \frac{\rho_0 c^2 \Delta t}{\Delta y} (U_y^{i,j+\frac{1}{2},n+\frac{1}{2}} - U_y^{i,j-\frac{1}{2},n+\frac{1}{2}})$$

These equations are updated in time by using a leap-frog scheme (cf. http://en.wikipedia.org/wiki/Leapfrog_integration). First, $U_x$ at time $n+1/2$ are computed from $p_x$ at time level $n$ and previous $U_x$ at time level $n-1/2$. Then $p_x$ at time level $n+1$ are computed from $U_x$ at time level n+1/2 and previous $p_x$ at time level $n$. Next, $n$ is incremented by one and the calculation of $U_x$ restarts again.

The 2D grid array in Fig. 2 illustrates, which values are used for calculating the next values in time. Where:

- $p(j,i)$ denote scattering junctions;
- $U_x$ ($j$, $i$) and $U_y$ ($j$, $i$) denote digital waveguides;
- $p$ ( 0, x), $p$ (max, x) , $p$ (x, 0 ) and $p$ (x, max) denote boundaries;
- the edges (0, 0), (0, max), (max, 0) and (max,max) are not used. Equations (5) to (8) can be extended by the z-component.

Then, equation (5) is to be replaced by

$$p(x, y, z, t) = p(i\Delta x, j\Delta y, k\Delta z, n\Delta t) = p^{i,j,k,n} \quad .$$ (9)

Boundaries require a special treatment. The normal equations cannot be applied due to missing neighbour waveguides. Therefore the boundary values are estimated. Section *C* provides more information on boundary conditions.

*A.4 Simulation parameters*

Besides mesh topology, the parameters used will influence the accuracy of the calculated wave propagation as well. The following parameters have to be chosen carefully:

- **time duration**

A good value for the total time duration is the room diagonal divided by the sound speed.

- **grid size**

The grid size $\Delta x$ should be much smaller than the minimum wavelength λ. The grid size can be non-uniform in different directions. For the investigations the grid size

$$\Delta x \leq \frac{\lambda}{N}$$ (10)

was used. C. Furse, "Lecture 15: Stability conditions with the fdtd algorithm", ECE6340, 4 March 2008, https://www.youtube.com/watch?v=z8pWq57rm_Y, proposed '10' for $N$, but the inventor has found that 5, 20 and 40 are also suitable values.

With

$$\lambda = \frac{c}{f_{max}} \quad , \quad f_{max} \le \frac{c}{N\Delta x} \tag{11}$$

is the maximum frequency usable in the model. J. Escolano, J.J. López, B. Pueo, "Directive sources in acoustic discrete-time domain simulations based on directivity diagrams", Journal of the Acoustic Society of America, vol. 121(6), p.7, 2007, proposed $\sqrt{2}$ for $n$ in a 2D-case, which seems to be critical. Assuming the wave is travelling diagonal to the grid, then the distance between two grid points is already $\Delta x \sqrt{2}$, or $\Delta x \sqrt{3}$ in a 3D grid, and therefore higher than in Escolano's proposal. For two samples per wavelength in a 3D-case, $N$ should be at least $2\sqrt{3} \approx 3.5$.

With $N$=3.5, a maximum simulation frequency of 3kHz and a sound speed of $343\frac{m}{s}$ at 20° Celsius, the grid size $\Delta x$ is approximately 3cm. This value was chosen for the first simulations.

**- stability**

Stability of the algorithm is assured, if the Courant factor $S = \frac{c\Delta t}{\Delta x}$ is less or equal to $\frac{1}{\sqrt{N}}$ where $N$ is the dimension and the spatial resolution is equal for all dimensions. For 2-D:

$$\frac{c\Delta t}{\Delta x} \le \frac{1}{\sqrt{2}} \quad , \quad c\Delta t \le \frac{\Delta x}{\sqrt{2}} \quad , \quad c\Delta t \le \frac{1}{\sqrt{(\frac{1}{\Delta x})^2 + (\frac{1}{\Delta y})^2}} \tag{12}$$

Escolano et al. has replaced $c$ with $c_{max}$:

$$c_{max}\Delta t \le \frac{1}{\sqrt{\left(\frac{1}{\Delta x}\right)^2 + \left(\frac{1}{\Delta y}\right)^2}} \tag{13}$$

Therefore $\Delta t$ has to be equal to or smaller than

$$\Delta t \le \frac{1}{c_{max}\sqrt{\left(\frac{1}{\Delta x}\right)^2 + \left(\frac{1}{\Delta y}\right)^2}} \quad . \tag{14}$$

For checking the correctness of the implementation, the sound velocity can be reduced and the corresponding output is compared with the former results.

**- time sample rate**

The minimum required sampling frequency $f_s$ = 1/$\Delta t$ is higher for higher dimensions. A good practice is to use $\Delta t$ = 2c$\Delta x$, cf. the above mentioned Furse lecture.

**- maximum simulation frequency**

The maximum simulation frequency should be less than $\dfrac{c}{\lambda 2\sqrt{3}}$ in the 3D case.

**- boundary method**

A further important parameter is the Boundary Method which is discussed below in the Boundary Conditions in section *C*.

*B Sound source*

When starting the simulation, an external impulse has to be injected in at least one of the discrete sound pressure points. For the frequency domain sine waves were used as sound sources and looked at the stabilised output, for the time domain impulses were used as sound sources and the transient part of the output was observed. A Dirac impulse would be ideal for the time domain, but the maximum simulation frequency has to be taken into account as described in the section *A.4*. Therefore, a smoothed-in time impulse was used as sound source.

Two further problems have to be taken into account. The time signal shape at the observation points could be different from that of the input pulse, which will be discussed in section *B.1.* In addition an artificial DC component could be introduced that prevents the solution from converging to zero, cf. J.B. Schneider, Ch.L. Wagner, O.M. Ramahi, "Implementation of transparent sources in fdtd simulations", IEEE Transactions on Antennas and Propagation, vol.46, no.8, August 1998, pp.1159-1168. A correct implementation is described in J.B. Schneider, Ch.L. Wagner, Sh.L. Broschat, "Implementation of transparent sources embedded in acoustic finite-difference time-domain grids", Washington State University, US, 1998. Other non-point sources are discussed in the above-mentioned Escalano/López article.

*B.1 Time smoothing*

Typical time smoothing functions used are:

**- Gaussian function**

A Gaussian function is a function of the form

$$s(t) = \frac{1}{\sigma\sqrt{2\pi}} e^{\frac{-((t-t_0)^2)}{2\sigma^2}} \quad . \tag{15}$$

The graph is a bell curve shape that has a peak at t=to and smoothed down to zero towards plus/minus infinity.

**- Kaiser Bessel window function**

The Kaiser Bessel Window function graph is similar to the bell curve shape, but the frequency response is narrower and has side lobes.

$$s(t) = \frac{I_o\left(a\sqrt{1-\left(\frac{2t}{M}-1\right)^2}\right)}{I_o(a)} \quad , \tag{16}$$

where $I_o$ is the zero-th order modified Bessel function of the first kind

$$I_o(x) = \sum_{k=0}^{\infty} \left( \frac{\left( \frac{x}{2} \right)^k}{k!} \right)^2 \quad . \qquad (17)$$

**- Ricker Wavelet**

The Ricker Wavelet, also called Mexican Hat wavelet, is the negative normalised second derivative of a Gaussian function and has no DC component

$$s(t) = \left(1 - 2\pi^2 f_r^2 (t - t_r)^2\right)\exp\left(-\pi^2 f_r^2 (t - t_r)^2\right) \quad , \qquad (18)$$

where $f_r$ is the peak frequency and $t_r$ the temporal delay. The peak frequency is the frequency with the greatest spectral content, cf. the above-mentioned Schneider/Wagner/Ramahi article.

**- Comparison**

The aim is to limit to an acceptable value that portion of the signal frequency which is higher than the maximum simulation frequency, see section *A.4* .

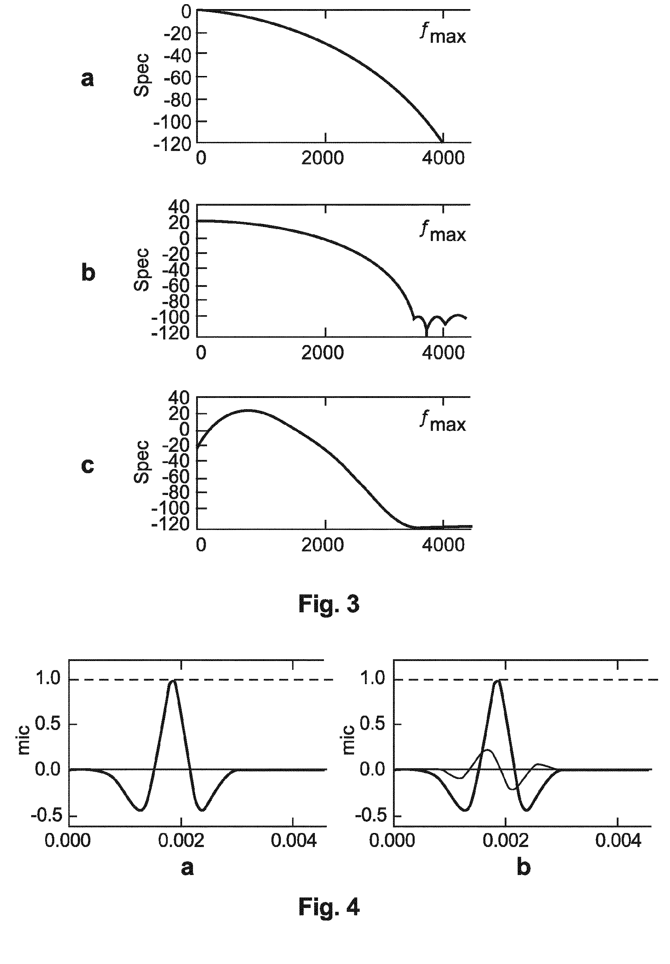

In Fig. 3 the different spectra are compared. The Kaiser Bessel window function in Fig. 3b has a steeper slope but less stop-band attenuation than the Gaussian function in Fig. 3a. The spectrum of the Kaiser Bessel function is flatter over a long area while the Ricker Wavelet function in Fig. 3c has no DC component.

**- Sinusoidal ramp**

For the frequency domain the stationary evaluation of a sinusoidal signal is required. However, the model always starts with zero energy, and starting with a sinus signal would introduce a step signal. Therefore the sinusoidal signal can be ramped up, for example with a Gaussian function.

**- 'Clean' impulse response**

A clean impulse response does not exist, cf. the above-mentioned Schneider/Wagner/Broschat article. The impulse response is correct for one and for three dimensions, but not for two dimensions. In one dimension, the impulse response will decay quickly to zero with a rate that is a function of the Courant number. In three dimensions, the impulse response approaches quickly a non-zero constant that depends on the Courant number. Unlike in one and three dimensions, in two dimensions the response does not quickly converge to a constant value but will decay slowly to zero. A point source in two-dimensions is a line source in three dimensions. This will be further described below in section *E*.

*B.2 Injection processing*

In the previous sections the mesh model, the equations and the design of potential sound sources as excitation signals were described. This section describes how the excitation signals can be inserted into the model.

**- Hard**

One possibility is to enforce one or more scattering points $p_{i,j,k}$ directly with the sound source signal $p_{i,j,k}(t) \leftarrow s(t)$. This will replace the existing pressure value by the sound source value and create a point source, see Fig. 4a in which the two curves are overlapping. As a consequence, this leads to a new boundary point in the model, acting as reflector for incoming waves nearby sound sources, like line sources or reflections. It is similar to the real world, where it is not feasible to insert a physical sound source without disturbing or changing the acoustical properties of the environment.

**- Soft**

Another possibility is to add the sound source signal to the existing pressure value $p_{i,j,k}(t) \leftarrow p_{i,j,k}(t) + s(t)$. In this case the excitation does not have the same shape as the designed sound source signal, see Fig. 4b.

**- Transparent source**

To get both, transparency and accuracy, it is proposed in the above-mentioned Schneider/Wagner/Ramahi and Schneider/Wagner /Broschat articles to use a soft-source and to create a source function that will produce the desired function at the existing pressure point. This can be performed by measuring the impulse response of an empty FDTD grid $h(t)$ and convolving it with the sound source $p_{i,j,k}(t) \leftarrow p_{i,j,k}(t) + (1 - (h(t) * s(t))$.

*C. Boundary conditions*

The boundaries of a room are responsible for the room reverberant characteristics. Normally, boundaries are frequency dependent. The effects of boundaries can be implemented using delay lines and combinations of lowpass/highpass filters. A particular problem is the model of an anechoic boundary. The above-mentioned Escolano/Pueo/Bleda/López article and D.T. Murphy, Ch.J.C. Newton, D.M. Howard, "Digital waveguide mesh modelling of room acoustics: Surround-sound, boundaries and plugin implementation", Proceedings of the COST G-6 Conference on Digital Audio Effects (DAFX-01), Limerick, IE, 6-8 December 2001, describe several solutions such as the Absorbing Boundary Conditions (ABC) or the Perfect Matched Layer (PML) method based on artificial absorbing layers.

**- Echo chamber**

A simple approach is to set the velocity at the boundaries to zero because in the real world, smooth and flat walls do not allow a gas particle velocity perpendicular to the wall. This is useful for modelling an Echo Chamber or some smooth and flat walls. This method was implemented to simulate the behaviour of walls. In contradistinction the pressure values can be set to zero at determined points in order to model open boundaries.

**- Anechoic chamber**

Proper boundary conditions need be used for minimising reflections from a truncated boundary in order to simulate a free space situation.

**- Reflection model**

In general the acoustic impedance changes at the boundary and the reflection factor can be calculated as

$$r = \frac{Z_2 - Z_1}{Z_2 + Z_1} \quad , \qquad\qquad (19)$$

where $Z$ is the characteristic acoustic impedance in $Nsm^{-3} (Z = \frac{p}{v})$ typically $413.2 \frac{Pa\,s}{m}$ at 1atm and

- $p$ is the sound pressure $(\frac{N}{m^2} \, or \, Pa)$,
- v is the particle velocity $(\frac{m}{s})$ .

The sound pressure for the boundary function can be calculated as a function of the sound pressure of the incident travelling wave $p_i^+$.

Here

$$p_B = (1+r)p_{B,i}^+ \quad , \tag{20}$$

where $p_B$ is the boundary point. Or, written as finite difference formulation,

$$p_B(n+1) = (1+r)p_{air}(n) - rp_B(n-1) \quad , \tag{21}$$

wherein with $r = 0$ an anechoic condition is simulated and with $r = 1$ a phase preserving total reflection with no absorption is simulated. Setting $r = -1$ effectively fixes the boundary junction to zero and results in phase reversing reflection, cf. the above-mentioned Murphy/Newton/Howard article.

**- Absorbing boundary conditions**

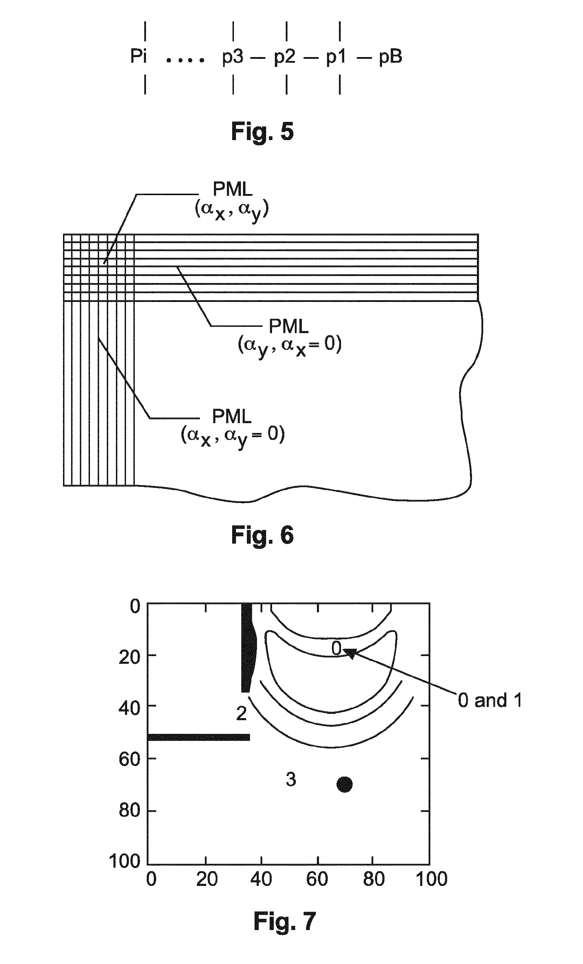

In one embodiment of the invention the Taylor Series ABC (Absorbing Boundary Conditions) is used, assuming a stencil of pressure values along a straight line perpendicular to the boundary as depicted in Fig. 5.
An approximation of $p_B(t \pm \Delta t)$ is required. Details are described in the above-mentioned Murphy/Newton/Howard article. The final result is given by

$$
\begin{aligned}
p_B(t+1)_0 &= p_1(t) \\
p_B(t+1)_1 &= 2p_1(t) - p_2(t-1) \\
p_B(t+1)_2 &= \frac{5}{2}p_1(t) - 2p_2(t-1) + \frac{1}{2}2p_3(t-2) \\
p_B(t+1)_3 &= \frac{8}{3}p_1(t) - \frac{5}{2}p_2(t-1) + p_3(t-2) - \frac{1}{6}p_4(t-3)
\end{aligned} \quad . \tag{22}
$$

The first equation (Order 0) has the same result as the reflection model above with $r = 0$ for the anechoic condition. In the experiments the Taylor Series ABC Order one was implemented. This requires that the history of some pressure points is stored in one more iteration, whereby the use of historical data needs more memory.

**- Perfect matched layers**

The currently best solution in our simulation software is the Perfectly Matched Layer (PML) absorbing boundary condition, see X. Yuan, D. Borup, J.W. Wiskin, M. Berggren, R. Eidens, St.A. Johnson, "Formulation and Validation of Berenger's PML Absorbing Boundary for the FDTD Simulation of Acoustic Scattering", IEEE Transactions On Ultrasonics, Ferroelectrics, and Frequency Control, vol.44, no.4, July 1997, and the above-mentioned Schneider/Wagner/Broschat article.
The PML absorbing boundary reduces reflections by 70dB, for a suitably chosen set of numerical parameters. PML is a perfect method of free space in that a plane wave does not change its direction of propagation or its speed when it propagates from a free space into a matched PML medium. Results indicate that an eight-layer PML boundary condition, together with a Ricker wavelet excitation signal (see section *B.1*) is enough for more than 300 calculation steps. The first-order acoustic equation is

$$\delta p(x,t) = -\rho \frac{\partial}{\partial t}\vec{U}(x,t) - \alpha^* \vec{U}(x,t) \tag{23}$$

$$\delta \vec{U}(x,t) = -\kappa \frac{\partial}{\partial t} p(x,t) - \alpha p(x,t) \quad , \tag{24}$$

where $p$ (scalar) is the pressured field, and $\vec{u}$ is the vector velocity field. $\rho$ is the mass density, and $\kappa$ is the compressibility of the medium $\left( c = \dfrac{1}{\sqrt{\kappa\rho}} \right)$. The attenuation coefficient associated with density, $\alpha^*$, generally is zero for an acoustic medium. In electro magnetics (EM) scattering it is related to magnetic loss. It is included here because the PML method relies on the introduction of a non-physical density attenuation in the absorbing layers.

For a plane wave perpendicular incident on a half-space boundary between a lossless acoustic medium ($\kappa,\rho,\alpha=0$) and a medium with $\kappa,\rho,\alpha^* = \alpha\rho/\kappa$ it can be shown that there is no reflection. For non- perpendicular incidents, however, the boundary does reflect. Berenger has found that incident plane waves at all angles can be absorbed, if the attenuation is made anisotropic.

In PML a non-physical set of equations is defined. Therefore $p$ is first split into additive components $\vec{p} = \vec{p_x} + \vec{p_y} + \vec{p_z}$ such that the second acoustic equation (2) can be split into three equations with $p=p_x$ related to $(\partial/\partial_x)U_x$ etc. In addition, $\alpha$ is assumed to be anisotropical.

The $\vec{p}$ has no independent physical interpretation. The only measurable physical quantity is

$$ p = \vec{p} \begin{pmatrix} 1 \\ 1 \end{pmatrix} \quad . \qquad\qquad (25) $$

The PML boundary condition is constructed by defining a PML $p$ sample-thick boundary grid, see Fig. 6. For the left and right side PML regions $a_y = 0$, and $a_x$ increases smoothly from the inner to the outer surface from zero to a maximum value.

*D. Room impulse response analysis*

As mentioned above, the simulation model can be implemented in Python, a general-purpose programming language, using the scientific tools for Python (*NumPy* - an extension that defines numerical arrays, *SciPy* - an advanced mathematics and signal processing extension and *Mathplotlib* to facilitate plotting). A simple MATLAB implementation was created by N. Clark, "Tiny_FDTD_v1.0", http://www.mathworks.com/ matlabcentral/, updated 7 August 2008, and in the above-mentioned I. Drumm article.

Fig. 7 shows the pressure values of some points recorded over time during a simulation run. These virtual microphone signals where analysed for correctness, whereby numbers 0 to 4 are indicating the position of the virtual microphones. Furthermore the last samples of the signal were smoothed down to zero using the second half of a Hann window.

Each one of the virtual microphones has an omni-directional characteristic (perfect sphere in three dimensions). However, A. Southern, D. Murphy, "Methods for 2nd order spherical harmonic spatial encoding in digital waveguide mesh virtual acoustic simulations", 2007 IEEE Workshop on Applications of Signal Processing to Audio and Acoustics, 21-24 October 2007, New Paltz, NY, US, show in their paper that also 1st and 2nd order spherical harmonics can be recorded using a set of virtual microphones.

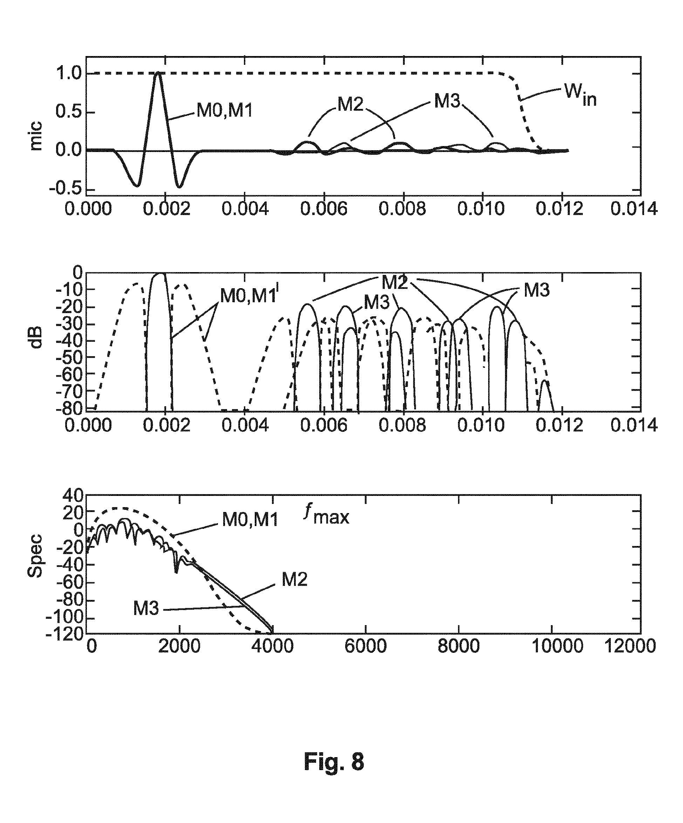

Fig. 8 shows the output of the simulation run. Three plots are calculated and presented. The top part of Fig. 8 represents a time plot of the 'microphone signals' with linear amplitude scaling. Microphone M4 is located in the bottom right at the room edge and is not depicted.

The medium part of Fig. 8 represents a decibel (dB) plot and shows the corresponding microphone time signals in decibel amplitude values. The dB function used is $20log_{10}|p|$.

The bottom part of Fig. 8 shows the corresponding spectrum signals. Before calculating the spectrum, the time signal is extended by zeros so that a total number of for example 512 samples is reached. Frequencies from 0Hz to 12000Hz are shown on the x axis.

*E. Results*

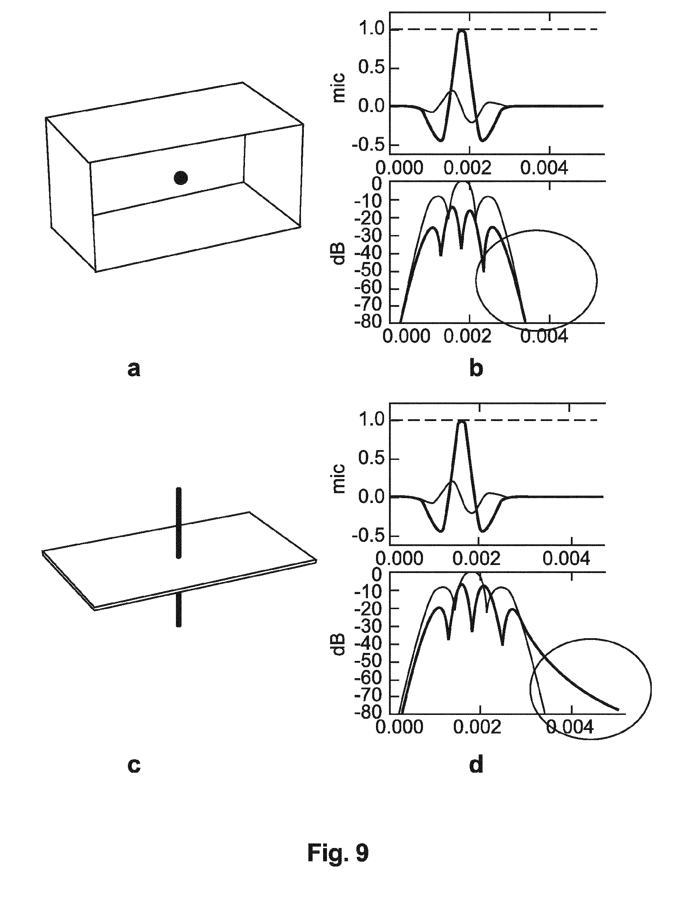

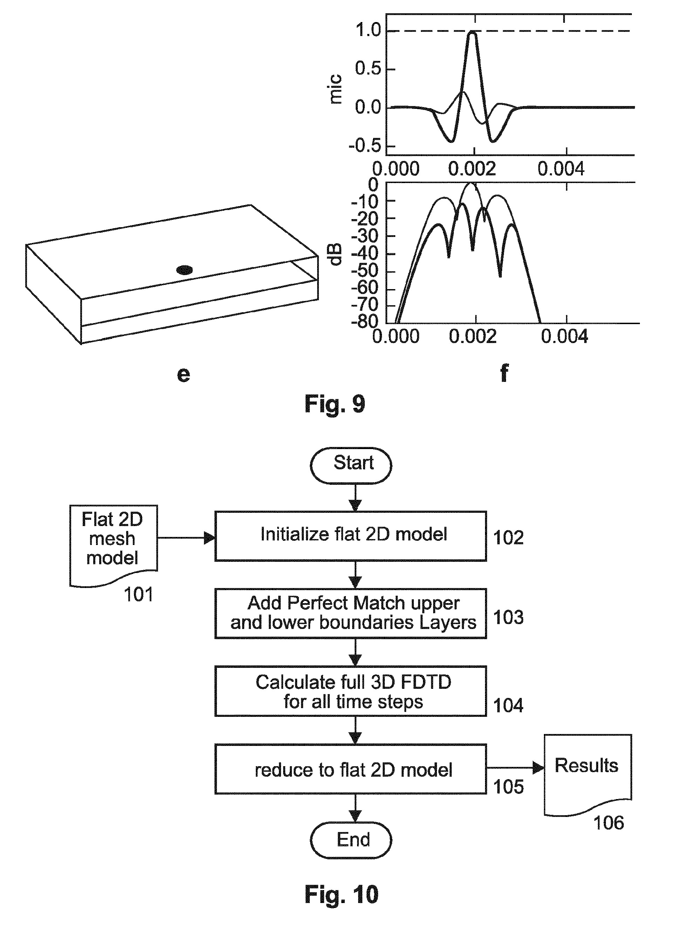

When using a (full) 3D model with a rectangular grid of 3cm edge length, results can be achieved for frequencies up to about 3000Hz. Soft Injection at the dot depicted in Fig. 9a can be used together with a Ricker Wavelet function as a sound source and Perfect Matched Layers as boundaries for the anechoic chamber model. However, the shape of the sound source was not corrected using the transparency injection, and therefore the excitation function does not have the same shape, see Fig. 9b (the plots of figures 9b, 9d and 9f are showing only a first part of the horizontal axis of Fig. 8, in a different vertical scaling).

For comparison, Fig. 9d shows the result for a slice of the entire room (representing a 2D model as depicted in Fig. 9c), which kind of processing has the advantage of faster calculation but, as explained in section *B.1*, the result is less accurate. For the 2D model, the impulse response is not correct and does not quickly converge to a constant value, because a 3D point source does not exist in two dimensions.

As described earlier, a trick is used in the invention for getting a sufficiently correct result without simulation of the entire 3D room: a 3D model in which the 3rd dimension has a thickness of only one mesh layer (see Fig. 9e) and in addition the room is enveloped with Perfect Matched Layer boundaries. The inventor has found that eight layers of PML are adequate for reaching a reflection which is smaller than 70dB. The inventive 3D model is in total 17 layers thick, consisting of 3cm of ideal air and two 24cm absorption material layers. To the contrary, using a full 3D model for a room with a height of 3 meters would require in total $\left(\frac{300cm}{3cm}\right) + 2 * \left(\frac{24cm}{3cm}\right) = 116$ layers, including the PML layers.

Therefore the inventive processing saves about 85% of calculation time while still keeping the accuracy of a 3D model, cf. the plots in Fig. 9f in comparison with the plots of Fig. 9b.

For the simulation of acoustic wave propagation in a 3D room the inventive processing shown in Fig. 10 starts with an initialisation 101, 102 of a flat initial 2D model of said 3D room, based on a rectangular mesh representing discrete sound pressure points. A following step or stage 103 adds perfect-match upper and lower boundary layers for the anechoic chamber model to that initial 2D model, so as to establish a pseudo-3D model of said room whereby the third dimension is only one mesh layer thick. In step or stage 104, a full 3D Finite Difference Time Domain is carried out for said pseudo-3D model of said room for all incremental time steps in the processing, whereby a sound source is injected into at least one of said discrete sound pressure points and Soft Injection can be used together with a Ricker Wavelet function as sound source. Finally in step or stage 105 the pseudo-3D model is reduced to a flat 2D model, or is only viewed at the relevant layer, and provides the desired acoustic wave propagation calculation result in step or stage 106.

The invention can be part of an acoustical optimisation for multi-loudspeaker presentations, i.e. for optimising the sound field quality for the listener.

The invention can be applied for 3D audio presentation systems like Wave Field Synthesis, Higher Order Ambisonics or loudspeaker based multichannel systems like 5.1, 7.2 or 22.2.

The inventive processing can be carried out by a single processor or electronic circuit, or by several processors or electronic circuits operating in parallel and/or operating on different parts of the inventive processing.

**Claims**

1. Method for determining acoustic wave propagation within a modelled 3D room using Finite Difference Time Domain processing for getting a room impulse response at an observation point within a rectangular grid array arranged within said modelled 3D room, wherein said grid array represents discrete sound pressure points, **characterised by** the steps:

   - adding (102, 103) to a flat initial 2D model of said 3D room perfect-match upper and lower boundary layers, whereby a third dimension of said initial 2D model is only one mesh layer thick, so as to establish a pseudo-3D model of said room;
   - carrying out (104) for said pseudo-3D model of said room a 3D Finite Difference Time Domain processing for all time incremental time steps, whereby a sound source is injected into at least one of said discrete sound pressure points;
   - reducing (105) said pseudo-3D model of said room to a 2D model so as to get the determined acoustic wave propagation.

2. Apparatus for determining acoustic wave propagation within a modelled 3D room using Finite Difference Time Domain processing for getting a room impulse response at an observation point within a rectangular grid array arranged within said modelled 3D room, wherein said grid array represents discrete sound pressure points, said apparatus including:

   - means (102, 103) being adapted for adding to a flat initial 2D model of said 3D room perfect-match upper and lower boundary layers, whereby a third dimension of said initial 2D model is only one mesh layer thick, so as to establish a pseudo-3D model of said room;
   - means (104) being adapted for carrying out for said pseudo-3D model of said room a 3D Finite Difference Time Domain processing for all time incremental time steps, whereby a sound source is injected into at least one of said discrete sound pressure points;
   - means (105) being adapted for reducing said pseudo-3D model of said room to a 2D model so as to get the determined acoustic wave propagation.

3. Method according to claim 1, or apparatus according to claim 2, wherein said pseudo-3D model of said room is reduced (105) to a 2D model by viewing at the 2D part.

4. Method according to claim 1 or 3, or apparatus according to claim 2 or 3, wherein for said sound source injection Soft Injection is used together with a Ricker Wavelet function as sound source.

5. Computer program product comprising instructions which, when carried out on a computer, perform the method according to claim 1, 3 or 4.

**Fig. 1**

$p_{01}$ ?   $p_{02}$ ?   $p_{03}$ ?

$U_{y00}$   $U_{y01}$   $U_{y02}$

$p_{10}$ ?   $U_{x00}$   $p_{11}$   $U_{x01}$   $p_{12}$   $U_{x02}$   $p_{13}$   $U_{x03}$   $p_{14}$ ?

$U_{y10}$   $U_{y11}$   $U_{y12}$

$p_{20}$ ?   $U_{x10}$   $p_{21}$   $U_{x11}$   $p_{22}$   $U_{x12}$   $p_{23}$   $U_{x13}$   $p_{24}$ ?

$U_{y20}$   $U_{y21}$   $U_{y22}$

$p_{31}$ ?   $p_{32}$ ?   $p_{33}$ ?

**Fig. 2**

**Fig. 3**

**Fig. 4**

Pi　.... p3 — p2 — p1 — pB

**Fig. 5**

PML
$(\alpha_x, \alpha_y)$

PML
$(\alpha_y, \alpha_x = 0)$

PML
$(\alpha_x, \alpha_y = 0)$

**Fig. 6**

**Fig. 7**

Fig. 8

Fig. 9

e

f

**Fig. 9**

**Fig. 10**

## EUROPEAN SEARCH REPORT

| | Europäisches Patentamt European Patent Office Office européen des brevets | | **Application Number** EP 13 30 6149 |

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ROBERT OLDFIELD ET AL: "A Finite Difference Time Domain Approach to Analysing Room Effects on Wave Field Synthesis Reproduction", AES CONVENTION 124, 1 May 2008 (2008-05-01), XP040508575, AES, New York, USA | 1-3,5 | INV. G10K15/00 G06F17/50 ADD. G01H7/00 |
| Y | * the whole document * | 4 | |
| X,D | JOSÉ ESCOLANO ET AL: "Wave Field Synthesis 3D Simulator Based on Finite-Difference Time-Domain Method", AES CONVENTION 116, 1 May 2004 (2004-05-01), XP040506869, AES, New York, USA | 1-3,5 | |
| Y | * abstract; figures 3-10 * * sections 3,4,5.1 * | 4 | |
| Y | J REDONDO ET AL: "Simulation of the sound propagation inside a wind instrument by means of the Finite-Difference Time-Domain Method", ACÚSTICA 2004, 14 September 2004 (2004-09-14), XP055099287, | 4 | TECHNICAL FIELDS SEARCHED (IPC) G01H G10K G06F |
| A | * the whole document * | 1-3,5 | |
| A | ANGUS JAMIE A S ET AL: "A GPGPU Approach to Improved Acoustic Finite Difference Time Domain Calculations", AES CONVENTION 128, 1 May 2010 (2010-05-01), XP040509346, AES, NEW YORK, USA * sections 1 and 2 * | 1-5 | |

-/--

The present search report has been drawn up for all claims

| Place of search | Date of completion of the search | Examiner |
|---|---|---|
| The Hague | 29 January 2014 | Scappazzoni, E |

EPO FORM 1503 03.82 (P04C01)

**EUROPEAN SEARCH REPORT**

Europäisches
Patentamt
European
Patent Office
Office européen
des brevets

Application Number

EP 13 30 6149

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | RAVISH MEHRA ET AL: "An efficient GPU-based time domain solver for the acoustic wave equation", APPLIED ACOUSTICS, vol. 73, no. 2, 25 May 2011 (2011-05-25), pages 83-94, XP028298350, ELSEVIER PUBLISHING, GB ISSN: 0003-682X, DOI: 10.1016/J.APACOUST.2011.05.012 [retrieved on 2011-06-24] * sections 1,2.1,3.1; figure 1 * | 1-5 | |
| A | JOE LOVETRI ET AL: "Modeling of the seat dip effect using the finite-difference time-domain method", THE JOURNAL OF THE ACOUSTICAL SOCIETY OF AMERICA, vol. 100, no. 4, 1 October 1996 (1996-10-01), page 2204, XP055099288, ISSN: 0001-4966, DOI: 10.1121/1.417929 * Introduction, sections I, III * | 1-5 | |
| A | RAMADAN O ET AL: "Parallel Implementation of the PML Algorithm for Truncating Finite-Difference Time-Domain Grids", COMPUTER SYSTEMS AND APPLICATIONS, 2006. IEEE INTERNATIONAL CONFERENCE ON, 8 March 2006 (2006-03-08), pages 118-122, XP010909349, PISCATAWAY, NJ, USA,IEEE ISBN: 978-1-4244-0211-3 * the whole document * | 1-5 | TECHNICAL FIELDS SEARCHED (IPC) |

-/--

| | | | |
|---|---|---|---|
| The present search report has been drawn up for all claims | | | |
| Place of search | Date of completion of the search | Examiner | |
| The Hague | 29 January 2014 | Scappazzoni, E | |

EPO FORM 1503 03.82 (P04C01)

## EUROPEAN SEARCH REPORT

Application Number

EP 13 30 6149

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | John B Schneider: "Understanding the Finite-Difference Time-Domain Method", , 4 September 2012 (2012-09-04), pages i-vi,7-403, XP055099289, School of Electrical Engineering and Computer ScienceWashington State University Retrieved from the Internet: URL:http://web.archive.org/web/20130319135008/http://www.eecs.wsu.edu/~schneidj/ufdtd/ufdtd.pdf [retrieved on 2014-01-29] * Chapters 3,11,12 * ----- | 1-5 | |
|  |  |  | TECHNICAL FIELDS SEARCHED (IPC) |

The present search report has been drawn up for all claims

| Place of search | Date of completion of the search | Examiner |
|---|---|---|
| The Hague | 29 January 2014 | Scappazzoni, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **I. DRUMM.** Finite Difference Time Domain Tutorial. *EPSRC Summer School,* 2007, vol. 2007, 1-9, www.acoustics.salford.ac.uk/res/drumm/ FDTD-FE/Implementing%20FDTD%20Tutorial.doc
- **J.B. SCHNEIDER.** *Understanding the Finite-Difference Time-Domain Method,* 25 May 2013, 321-327, www.eecs.wsu.edu/~schneidj/ufdtd/ufdtd.pdf
- **J. ESCOLANO ; B. PUEO ; S. BLEDA ; J.J. LÓPEZ.** Wave Field Synthesis 3D Simulator Based on Finite-Difference Time-Domain Method. *AES Convention 116,* May 2004
- **ST. BILBAO.** DIGITAL WAVEGUIDE NETWORKS FOR INHOMOGENEOUS MEDIA. *Proceedings of the COST G-6 Conference on Digital Audio Effects (DAFX-00,* 07 December 2000
- **L. SAVIOJA.** Modeling Technics for Virtual Acoustics. *Dissertation,* 03 December 1999
- **D.T. MURPHY ; D.M. HOWARD.** 2-D digital waveguide mesh topologies in room acoustics modelling. *Proceedings of the COST G-6 Conference on Digital Audio Effects,* 07 December 2000
- **C. FURSE.** Lecture 15: Stability conditions with the fdtd algorithm. *ECE6340,* 04 March 2008, https://www. youtube.com/watch?v=z8pWq57rm_Y
- **J. ESCOLANO ; J.J. LÓPEZ ; B. PUEO.** Directive sources in acoustic discrete-time domain simulations based on directivity diagrams. *Journal of the Acoustic Society of America,* 2007, vol. 121 (6), 7

- **J.B. SCHNEIDER ; CH.L. WAGNER ; O.M. RAMA-HI.** Imple-mentation of transparent sources in fdtd simulations. *IEEE Transactions on Antennas and Propagation,* August 1998, vol. 46 (8), 1159-1168
- **J.B. SCHNEIDER ; CH.L. WAGNER ; SH.L. BRO-SCHAT.** *Implementation of transparent sources embedded in acoustic finite-difference time-domain grids,* 1998
- **D.T. MURPHY ; CH.J.C. NEWTON ; D.M. HOWARD.** Digital waveguide mesh modelling of room acoustics: Surround-sound, boundaries and plugin implementation. *Proceedings of the COST G-6 Conference on Digital Audio Effects,* 06 December 2001
- **X. YUAN ; D. BORUP ; J.W. WISKIN ; M. BERGGREN ; R. EIDENS ; ST.A. JOHNSON.** Formulation and Validation of Berenger's PML Absorbing Boundary for the FDTD Simulation of Acoustic Scattering. *IEEE Transactions On Ultrasonics, Ferroelectrics, and Frequency Control,* July 1997, vol. 44 (4
- **N. CLARK.** *Tiny_FDTD_v1.0,* 07 August 2008, http://www.mathworks.com/ matlabcentral
- **A. SOUTHERN ; D. MURPHY.** Methods for 2nd order spherical harmonic spatial encoding in digital waveguide mesh virtual acoustic simulations. *2007 IEEE Workshop on Applications of Signal Processing to Audio and Acoustics,* 21 October 2007